(19) Europäisches Patentamt
European Patent Office
Office européen des brevets

(11) **EP 4 660 686 A1**

(12) **EUROPEAN PATENT APPLICATION**

(43) Date of publication:
**10.12.2025 Bulletin 2025/50**

(21) Application number: **24425025.4**

(22) Date of filing: **07.06.2024**

(51) International Patent Classification (IPC):
**G02B 27/01** (2006.01) **G02B 27/00** (2006.01)

(52) Cooperative Patent Classification (CPC):
**G02B 27/0093**; G02B 2027/0178; G02B 2027/0187

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Luxottica S.r.l.**
**32021 Agordo (Belluno) (IT)**

(72) Inventors:
• **Merigo, Luca**
**32021 Agordo (BL) (IT)**
• **Ongarello, Tommaso**
**32021 Agordo (BL) (IT)**

• **Crafa, Daniele Maria**
**20133 Milano (MI) (IT)**
• **Marcon, Marco**
**20133 Milano (MI) (IT)**
• **Pezzoli, Carlo**
**20133 Milano (MI) (IT)**
• **Paracchini, Marco Brando Mario**
**20133 Milano (MI) (IT)**
• **Carminati, Marco**
**20133 Milano (MI) (IT)**

(74) Representative: **Biallo, Dario et al**
**Barzanò & Zanardo S.p.A.**
**Via Borgonuovo, 10**
**20121 Milano (IT)**

(54) **EYEWEAR WITH EYE-TRACKING SYSTEM**

(57) Eyewear (100) comprising: - a frame (110) comprising a front (111), two temples (112, 113) coupled to the front (111) and at least one lens (114, 115) coupled to the front (111); - an eye-tracking system (200) associated to the frame (110);

characterized in that the eye-tracking system (200) comprises: - at least one infrared radiation source (210) coupled to the frame (110) so as to face and emit infrared radiation towards a respective eye to be tracked of a user when such a user wears the eyewear (100); - a plurality of infrared detectors (220) coupled to the edge of the at least one lens (114, 115), said infrared detectors (220) being configured to detect the optical signal reflected by the eye to be tracked and generate a respective an electric detection signal; - a processing and control unit (230) associated to the at least one infrared radiation source (210) and to the plurality of infrared detectors (220), said processing and control unit (230) being configured to activate the at least one infrared radiation source (210) so as to emit the infrared radiation, to receive the electric detection signals and to to estimate the direction of the gaze of the eye to be tracked on the basis of said received electric detection signals; - a battery (240) associated to the processing and control unit (230), the infrared detectors (220) and to the at least one infrared radiation source (210) so as to electrically supply them.

Fig. 1

**Description**

The present invention refers to eyewear, in particular smart eyewear comprising an eye-tracking system.

Smart eyewear encompasses any type of device designed to be worn over at least one eye of a wearer and having a frame configured to be mounted on a head, including any head-mountable device.

As known, smart eyewear comprise electronic devices adapted to operate as an electronic calculator capable of supporting the activities carried out by the user wearing them.

In more details, the electronic devices are for example capable of playing audio and video, launch and run software applications, recognize shapes and objects placed in the surrounding environment.

More in particular, the electronic devices usually comprise a processing and control unit and sensors integrated into the spectacle frame or temples.

For example, it is common to provide smart eyewear with an eye-tracking system in order to activate/deactivate some functionalities of the smart eyewear, for example for augmented and mixed reality, and/or monitoring the movement of the eye for medical, psycological, commercial and marketing purposes, e.g. for tracking the direction of the gaze towards a shop window or a supermarket shelf.

Several different type of eye-tracking systems are currently known.

An eye-tracking system of a first type, which is the most widely used, comprises one or more sources for illuminating the eye under tracking and one or more cameras for capturing the movement of the eye. Such a system is, however, bulky and therefore cannot be embedded in smart eyewear that must appear identical to the common eyewear.

In view of this drawback an eye-tracking system of a second type is becoming more attractive, which comprises one or more infrared and/or near-infrared wavelengths sources that illuminate the eye to be tracked and detectors to detect the optical signal reflected by the illuminated eye; in these systems the direction of the gaze is obtained on the basis of the detected optical signal. Since these systems operate at infrared and/or near-infrared wavelengths that are outside the sensitivity range of the human-eye, they do not interfere with the sight capacity.

In the present description for infrared wavelengths it is intended to indicate wavelengths comprised between 700nm and 1mm.

For near-infrared wavelengths it is intended to indicate wavelengths comprised between 700nm and 10μm.

US 5,345,281, US 2018/0113508A1, US 2019/0384388A1 describe examples of eye-tracking system of the second type.

The object of the present invention is to to devise an eyewear with an eye-tracking system which is more accurate than the eye-tracking system of the prior art. This and other objects according to the present invention are achieved by making a eyewear with an eye-tracking system as set forth in claim 1.

Further characteristics of the eyewear with an eye-tracking system are the objects of the dependent claims. The characteristics and advantages of the eyewear with an eye-tracking system according to the present invention will be more evident from the following exemplary though non-limiting description, referring to the attached schematic drawings in which:

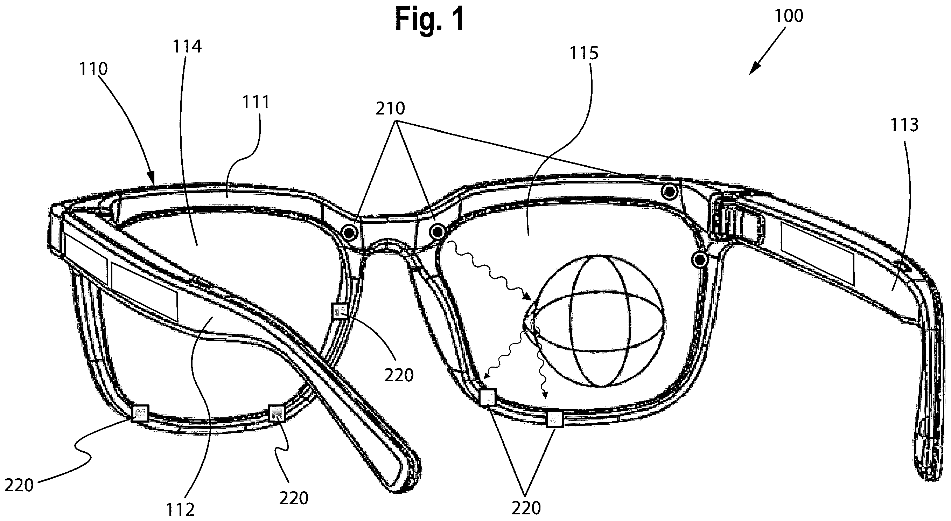

- Figure 1 is a schematic perspective view of an eyewear according to the present invention;

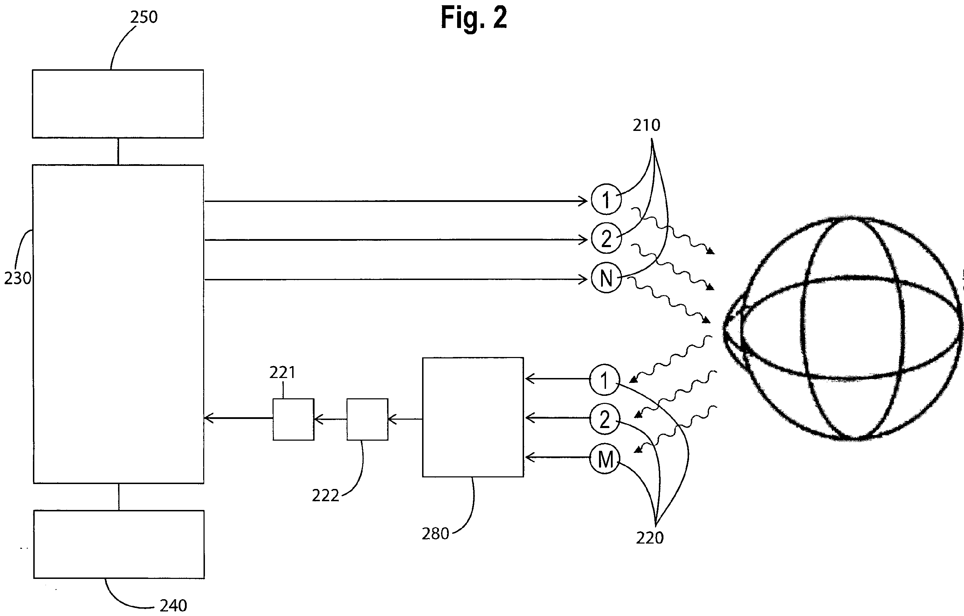

- Figure 2 is a block scheme representing the electronic devices included in the eyewear according to the present invention

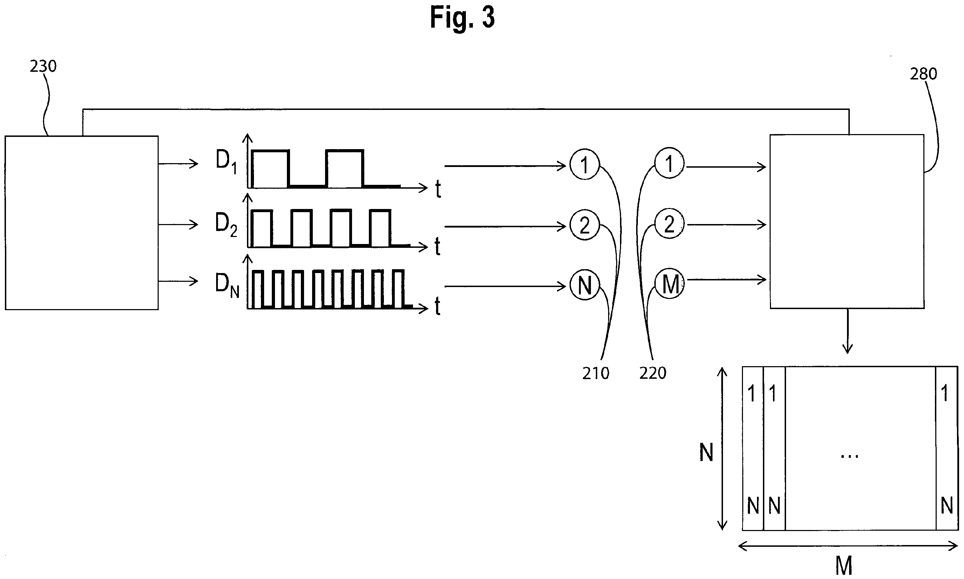

- Figure 3 is a block scheme representing the modulation of the infrared radiation source through N square waveforms of different frequencies, the demodulation of the signals detected by the M infrared detectors, and the block of acquired data per eye position shown as a MxN matrix.

With reference to the figures, an eyewear is shown, globally referred to as 100.

The eyewear 100 comprises a frame 110 which may comprise a front 111, two temples 112, 113 coupled to the front 111 and at least one lens 114, 115 coupled to the front 111. For example, the eyewear is an eyeglass and in this case it can comprise two lenses; the eyewear 100 can be a also a ski-mask or a mask sunglass and in this case it can comprise a single lens.

The eyewear 100 advantageosuly comprises an eye-tracking system 200 associated to the frame 110. The eye-tracking system 200 comprises at least two infrared radiation sources 210 coupled to the frame 110 so as to face and emit infrared radiation towards a respective eye to be tracked of a user when such a user wears the eyewear 100.

In the illustrated embodiments, there are at least two infrared radiation sources 210. In particular, the eye-tracking system 200 may comprise at least two infrared radiation sources 210 for each eye to be tracked. In any case, the at least two infrared radiation sources 210 must be directed towards the eye to be tracked.

For example the at least two infrared radiation sources 210are two LEDs.

The eye-tracking system 200 comprises at least one infrared detector 220 coupled to the frame 110.

In particular, at least one infrared detector 220 may be coupled to the front 111 or to the at least one lens 114, 115.

The at least one infrared detector 220 is configured to detect the optical signal reflected by the eye to be tracked at the infrared wavelengths, preferably at near-infrared wavelengths, more preferably around 850nm; the at least one infrared detector 220 is also configured to generate a respective an electric detection signal.

For example the at least one infrared detector 220 may be made as solid-state semiconductor detectors, for example as photodiodes. For example infrared detectors 220 may be made of silicon or other semiconductors, or other materials such as solution-processable ones.

The electric detection signals generated by the at least one infrared detector 220 may be analog.

In particular, the electric detection signals generated by the at least one infrared detector 220 may be analog current detection signals.

The at least one infrared detector 220 may be directly or undirectly connected to an analog signal converter circuit 222 converting the analog current detection signals into an analog voltage detection signals. The output of this analog signal converter circuit 222 may be connected to an analog-to-digital (ADC) converter 221 configured to convert the analog electric detection signals into digital electric detection signals.

In some embodiments the analog signal converter circuit 222 is not present and the at least one infrared detector 220 may be directly or undirectly connected to the ADC converter 221.

Moreover, the analog signal converter circuit 222, if present, and the ADC converter can be embedded into the detector 220 or they can be external with respect to the detector 220 to which it is associated. If the eventually present analog signal converter circuit 222 and the ADC converter 221 are embedded into the detector 220, the electric detection signals generated by infrared detectors 220 are digital.

The eye-tracking system 200 comprises also a processing and control unit 230 associated to the at least two infrared radiation sources 210 and to the at least one infrared detector 220. In particular the processing and control unit 230 is configured for controlling each one of the at least two infrared radiation sources 210 so as to emit an infrared radiation modulated with a respective modulation signal, to receive the electric detection signals and to estimate the direction of the gaze of the eye to be tracked on the basis of said received electric detection signals. More in detail, the modulation signals have different frequencies and may have different shape to each other.

For example the processing and control unit 230 is a microcontroller.

Preferably, the eye-tracking system 200 comprises also a demodulation module 280 for each infrared radiation source 210. The demodulation module 280 is, in particular, associated with the at least one infrared detector 220.

Each demodulation module 280 is configured to filter the received electric detection signals with one noise filter adapted to the respective infrared radiation sources 210 wherein the noise filter is configured to reduce the contribution of the noise in the received electric detection signals.

The filter may be analogue or digital. In case the filter is analogue the demodulation module 280 is connected to the output of the at least one infrared detector 220. In particular, the output of the demodulation module 280 may be directly connected to the ADC converter 221 the output of which is directly connected to the processing and control unit 230. Alternatively, the output of the demodulation module 280 may be directly connected to the analog signal converter circuit 222 the output of which is directly connected to the ADC converter 221 the output of which is directly connected to the processing and control unit 230.

Differently, in case the filter is digital the demodulation module 280 is integrated in the processing and control unit 230. In this case, the output of the at least one infrared detector 220 may be directly connected to the the analog signal converter circuit 222 the output of which is directly connected to the ADC converter 221 the output of which is directly connected to the processing and control unit 230. Alternatively, the output of the at least one infrared detector 220 may be directly connected to the ADC converter 221 the output of which is directly connected to the processing and control unit 230.

Preferably the noise filter is configured to minimize the contribution of the noise in the received electric detection signals; in this case the noise filter is called matched noise filter and has a temporal transfer function equal to the mirrored temporal function of the modulation signal of the relative infrared radiation source 210.

For mirrored temporal function it is intended a function having a shape that is mirrored with respect to the original function shape wherein the mirroring occurs around a time instant.

Let us consider the case of an eye-tracking system 200 with a number N of infrared radiation sources 210 with $N \geq 2$ and a number M of infrared detectors 220 with $M \geq 1$. When the N infrared radiation sources 210 emit the modulated infrared radiations towards an eye to be tracked, such modulated infrared radiations are reflected, refracted and scattered by different parts of the eye and surrounding skin. Due to the rotation in azimuth and elevation of the eyeball and the movement of the eyelids (blinking), the light emitted by each one of the N infrared radiation sources 210 is absorbed, reflected, and scattered in different directions and with different intensities. Each one of the M infrared detectors 220 receives the contributions of the modulated infrared radiations reflected and scattered by the eye and the surrounding skin. The intensity of the infrared radiation emitted by each one of the N infrared radiation sources 210 is modulated with a modulation signal that has a temporal function $f_n(t)$, where the subscript n, ranging from 1 to N, indicates the nth source.

In the hypothesis that the distance traveled by light between the N infrared radiation sources 210 and the M infrared detectors 220 can be considered a Gaussian channel and the ambient light noise can be considered an additive white Gaussian process, it can be written that the signal $g_m(t)$ received by the mth infrared detector is equal to:

$$\breve{g}_m(t) = a_{n,m} f_n(t) + w(t)$$

where $a_{n,m}$ represents the attenuation of the signal emitted by the nth infrared source and received by the mth infrared detector; such an attenuation is induced by the absorption of the eye and the surrounding parts as well as the dispersion caused by the absorption cone of the mth infrared detector. The attenuation is assumed to be constant during the period of time in which the mth infrared detector detects the signal. The duration of each individual detection must therefore be such as to be negligible compared to eye or eyelid movements.

Defined $h_m(t)$ as the filter applied to the signal detected by the m-th detector, the value at the output of the filter can be defined as:

$$y_m(t) = g_m(t) * h_m(t) = a_{n,m} f_n(t) * h_m(t) + w(t) * h_m(t) = s_n(t) + \hat{n}(t)$$

where the symbol * represents the convolution operation and $\hat{n}(t)$ represents the white noise at the output of the noise filter.

It is therefore possible to define the signal-to-noise ratio at the output of the receiving filter at time $\tau$ as:

$$SNR_{nm}(\tau) = \frac{|s_n(\tau)|^2}{E\{|\hat{n}(\tau)|^2\}}$$

By applying the Parseval's theorem, thanks to the fact that the Fourier transform is a unitary operator, we can write:

$$SNR_{n \to m} = \frac{|s_n(\tau)|^2}{E\{|\hat{n}(\tau)|^2\}} = \frac{\left| \int_{-\infty}^{\infty} a_{m,n} F_n(\omega) H_m(\omega) e^{j\omega\tau} d\omega \right|^2}{\sigma_{\hat{n}}^2 \int_{-\infty}^{\infty} |H_m(\omega)|^2 \, d\omega}$$

By applying the Schwartz inequality, we can write:

$$SNR_{n \to m} = \frac{\left| \int_{-\infty}^{\infty} a_{m,n} F_n(\omega) H_m(\omega) e^{j\omega\tau} d\omega \right|^2}{\sigma_{\hat{n}}^2 \int_{-\infty}^{\infty} |H_m(\omega)|^2 d\omega} \leq \frac{a_{m,n} \int_{-\infty}^{\infty} |F_n(\omega)|^2 d\omega \int_{-\infty}^{\infty} |H_m(\omega)|^2 d\omega}{\sigma_{\hat{n}}^2 \int_{-\infty}^{\infty} |H_m(\omega)|^2 d\omega} =$$

$$\frac{a_{m,n} \int_{-\infty}^{\infty} |F_n(\omega)|^2 d\omega}{\sigma_{\hat{n}}^2}$$

The equality, which maximizes the SNR ratio, occurs when

$$H_m(\omega) = F_n(\omega)^* e^{-j\omega\tau}$$

Therefore, by applying the inverse Fourier transform, we obtain, $h_m(t) = F^{-1}\{H_m(\omega)\} = f_n(\tau - t)$.

The matched noise filter is then be equal to the mirrored temporal function of the modulation signal and the sampling should occur after the conclusion of the duration of the modulated infrared radiation.

The time $\tau$ therefore is the time duration of the matched noise filter; furthermore it represents the optimal instant for sampling in order to maximize the SNR in combination with the use of the matched noise filter.. In order to minimize intersymbol interference (ISI) and to be able to distinguish the contribution of each infrared source n on each infrared detector m, it is necessary for the infrared sources, in the case of simultaneous transmission from each infrared source, to use modulation signals that are orthogonal to each other, that is:

$$\langle f_a(t) | f_b(t) \rangle = \int_0^{\tau} f_a(t)^* f_b(t) dt = \begin{cases} 1 \; if \; a = b \\ 0 \; if \; a \neq b \end{cases}$$

This approach allows for complete separation of each infrared source's contribution by each infrared detector, thus obtaining maximum separability between the signals.

Preferably, the modulation signals are substantially orthogonal to each other.

For example the modulation signals are sinusoids with different frequencies. In order to satisfy the above reported condition for the orthogonality by all N sources at each sampling instant (multiple of the period $\tau$), the frequencies used for the different sinusoids must be multiples of the fundamental frequency $1/\tau$.

However the modulation signals may be also of a non-sinusoidal type. For example, the modulation signals may be square waves more easily achieved in an embedded system.

In the sinusoidal case, the values obtained from filtering on each infared detector for each of the N sinusoids correspond to the Fourier series value for that specific frequency, that is a period or a multiple of a period of the relative sinusoidal signal.

The previously reported equations refers to the analogue filter case. In such a case, the filtered signals are then sampled with a sampling period equal to a multiple of the matched noise filter duration that is time $\tau$. In the digital case, all the above equations has to be converted in the discrete time domain and all the demodulation process is performed by a demodulation module 280 incorporated in the processing and control unit 230.

In this case (digital filter) it is necessary to sample the signal from each infrared detectors at a frequency that is at least twice the maximum frequency of the modulating sinusoids in order to adhere to the sampling theorem.

This will make it possible to directly use the Discrete Fourier Transform (DFT) to determine the amplitudes of each infrared source received by each infrared detector. The sampling frequency should also be a multiple of the frequency of the sinusoid with the maximum frequency in order to avoid the effect of frequency leak between different frequencies and maximize the SNR.

The processing and control unit 230, in particular, can comprise an internal memory (not illustrated) wherein a computer program is loaded; such a computer program comprises instructions that, when the computer program is executed by an electronic processing unit, actuates an estimate algorithm to estimate the direction of the gaze of the eye to be tracked on the basis of the received electric detection signals.

In particular, at the end of the detecting process of the M infrared detectors, the set of amplitude values of the signals emitted by the N infrared sources received by each of the M infrared detectors is obtained. These values are collected by the processing and control unit 230 in a single vector of length MxN elements, which can be considered a vector in an MxN-dimensional space.

The processing and control unit 230 is then configured for associating to each vector an azimuth angle and an elevation angle of the eyeball with respect to the frame of the glasses. This association is performed by applying a nonlinear transformation function between the MxN-dimensional space and a 2-dimensional space represented by the two angles. This nonlinear transformation can be performed using various estimate algorithms implementing pattern recognition techniques like for example the following techniques:

- a lookup table interpolation, whose basis can be obtained from a series of real samples;
- Neural networks based on Radial Basis Functions;
- Kohonen Networks specifically developed for the nonlinear mapping from a high-dimensional space to a 2-dimensional space.

Generally, other techniques based on Artificial Neural Network (ANN) and non-linear mapping may be used. Through this processing, it is therefore possible to associate the amount of IR radiation received from each infrared detector and emitted by each infrared source to the azimuth and elevation rotation angles of the eye. It is also possible to identify the situation of closed eyelids (blinking).

In case the estimate algorithm is based on an Artificial Neural Network it is trained by means of a dataset of maps of detected signals associated to the corresponding gaze directions of suitable size. The dataset can be composed of both simulated and experimental data generated with known directions of gaze. The former can be automatically acquired, for instance, by means of an artificial eye with a similar response in the infrared spectrum to the human eye, whereas the latter (experimental data) can be obtained asking the subject to look at a specific target in a specific direction with respect to the frame of the eyewear. The artificial eye can be mounted on a motor-actuated stage whose position may be scanned thorough a dense grid of points identified by a couple of angles, in particular elevation and azimuth angles, defining the direction of gaze. The training allows to determine the weights of the ANN that are stored in the internal memory in order to run the eye tracking estimation in real time.

Therefore, the training process of the algorithm implemented by the computer program stored in the internal memory of the processing and control unit 230 comprises the following steps:

- performing the experimental dataset acquisition step which provides the steps:

- providing an eyewear 100 equipped with the eye-tracking system 200;
- providing an artificial eye mounted on a support so as to be rotatable around two rotational axes according to a plurality of poses defined by a respective elevation angle or a pitch angle and a respective azimuth angle or yaw angle;
- arranging the eyewear 100 in front of the artificial eye;
- scanning a dense grid of points in the space of angles, i.e. couples of elevation and azimuth angles in the range of angles to be estimated by the eye-tracker system 200 and for each point acquiring the electric detection signals from the at least one infrared detector 220;

- training the algorithm by using a fraction of the acquired experimental dataset,i.e. finding the optimal values of its hyperparameters, and by using another fraction of the acquired experimental dataset for validation.

Once the training process has ended, the optimal validated parameters for example the weights of the ANN, are loaded in the computer program.

Preferably, the at least two infrared radiation sources 210 is configured for emitting infrared radiations at different respective wavelengths.

This allows to obtain an eye-tracking even more accurate since the different parts of the eye (such as the ocular fundus) show a reflectance which changes with wavelength. If, for example the sclera reflectance is constant in the selected IR spectral range, while the reflectance of the fundus increases with wavelength, by choosing two wavelengths $\lambda_1$ and $\lambda_2$ in the IR region (e.g. 850nm and 950nm respectively) and comparing the reflected signals $R(\lambda_2)/R(\lambda_1)$ a better contrast between different tissues could be obtained with respect to the case with a single wavelength.

Preferably, the processing and control unit 230 is configured for controlling the at least two infrared radiation sources 210 so as they emit the respective modulated infrared radiation at the same time. Preferably, the processing and control unit 230 is configured for controlling the at least two infrared radiation sources 210 so as they emit the respective modulated infrared radiation according to a sequential order.

Preferably, the eye-tracking system 200 may comprise also a battery 240 associated to the processing and control unit 230, the at least one infrared detector 220 and to the at least two infrared radiation sources 210 so as to electrically supply them.

The eye-tracking system 200 may also comprise a wireless communication module 250 associated to the processing and control unit 230 configured to communicate in a wireless manner with an electronic terminal, such as a smartphone.

The performance of the estimation of the gaze direction and other eye parameters, like blink or pupil diameter depends on the number of the infrared detectors and their position. The optimal position can be obtained through numerical simulation. In particular, it is possible to change the number and the position of the at least one infrared radiation source 210 and of the infrared detectors 220 by means of optical simulations in order to maximise the amount of light collected by the infrared detectors 220 and the spatial resolution, i.e. the sensitivity of the collected light maps to the direction of gaze.

The number of detectors 220 determines not only the angular resolution of the calculation of the gaze direction but also the value of the power consumption and dissipation. In particular the largest is the number of detectors 220 the largest is such an angular resolution but at the same time the largest is the value of the power consumption and dissipation.

It is necessary to establish a number of detectors which represents a compromise between the need of sufficiently high angular resolution and sufficiently low power consumption and dissipation.

Preferably the processing and control unit 230 and the battery 240 are mounted in two different parts of the frame. However they can be also mounted inside the same part of the frame.

In any case the interconnections between the at least one infrared detectors 220, the at least two infrared source 210, the processing and control unit 230 and the battery may be achieved by means of wires or flexible printed circuit boards PCBs.

In a particular embodiment the battery 240 comprises a system of photovoltaic cells adapted to recharge the battery 240.

The eye-tracking system 200 may be provided also in a head-mountable device. In such a case the head-mountable device comprises a frame configured to be mounted on a head, at least one lens coupled to the frame so as to be positioned in front of at least one eye and an eye-tracking system 200 associated to the frame wherein the eye-tracking system and the at least one lens may be made as previously described.

From the description made, the characteristics of the eyewear, object of the present invention, are clear, as are the relative advantages.

Finally, it is clear that the eyewear thus conceived is susceptible of numerous modifications and variations, all of which are within the scope of the invention; moreover, all the details may be replaced by technically equivalent elements. In practice, the materials used, as well as their dimensions, can be of any type according to the technical requirements.

**Claims**

1. Eyewear (100) comprising:

   - a frame (110) ;
   - an eye-tracking system (200) associated to the frame (110) ;

   **characterized in that** the eye-tracking system (200) comprises:

   - at least two infrared radiation sources (210) coupled to the frame (110) so as to face and emit infrared radiation towards a respective eye to be tracked of a user when such a user wears the eyewear (100) ;
   - at least one infrared detector (220) coupled to the frame (110), said at least one infrared detector (220) being configured to detect the optical signal reflected by the eye to be tracked and generate a respective an electric detection signal;
   - a processing and control unit (230) associated to the at least two infrared radiation sources (210) and to the at least one infrared detector (220), said processing and control unit (230) being configured for controlling each one of the at least two infrared radiation sources (210) so as to emit an infrared radiation modulated with a respective modulation signal, to receive the electric detection signals and to estimate the direction of the gaze of the eye to be tracked on the basis of said received electric detection signals.

2. Eyewear (100) according to claim 1 wherein the modulation signals have different frequencies to each other.

3. Eyewear (100) according to claim 1 or 2 wherein the modulation signals have different shape to each other.

4. Eyewear (100) according to one or more of the previous claims wherein the modulation signals are substantially orthogonal to each other.

5. Eyewear (100) according to one or more of the previous claims wherein the at least two infrared radiation sources (210) are configured for emitting infrared radiations at different respective wavelengths.

6. Eyewear (100) according to one or more of the previous claims wherein the processing and control unit (230) is configured for controlling the at least two infrared radiation sources (210) so as they emit the respective modulated infrared radiations at the same time.

7. Eyewear (100) according to one or more of the previous claims wherein the processing and control unit (230) is configured for controlling the at least two infrared radiation sources (210) so as they emit the respective modulated infrared radiations according to a sequential order.

8. Eyewear (100) according to one or more of the previous claims comprising a battery (240) associated to the processing and control unit (230), the at least one infrared detector (220) and to the at least two infrared radiation sources (210) so as to electrically supply them.

9. Eyewear (100) according to one or more of the previous claims wherein the processing and control unit (230) is configured to filter the received electric detection signals with at least two noise filter, one for each infrared radiation source, wherein the noise filter is configured to reduce the contribution of the noise in the received electric detection signals.

10. Eyewear (100) according to claim 9 wherein the noise filter is configured to minimize the contribution of the noise in the received electric detection signals, the noise filter having a temporal transfer function equal to a mirrored temporal function of the modulation signals.

11. Head-mountable device comprising:

    - a frame configured to be mounted on a head and at least one lens coupled to the frame so as to be positioned in front of at least one eye of a user;
    - an eye-tracking system (200) associated to the frame (110);

    **characterized in that** the eye-tracking system (200) comprises:

- at least two infrared radiation sources (210) coupled to the frame (110) so as to face and emit infrared radiation towards a respective eye to be tracked of a user when such a user wears the eyewear (100);
- at least one infrared detector (220) coupled to the frame (110), said at least one infrared detector (220) being configured to detect the optical signal reflected by the eye to be tracked and generate a respective an electric detection signal;
- a processing and control unit (230) associated to the at least two infrared radiation sources (210) and to the at least one infrared detector (220), said processing and control unit (230) being configured for controlling each one of the at least two infrared radiation sources (210) so as to emit an infrared radiation modulated with a respective modulation signal, to receive the electric detection signals and to estimate the direction of the gaze of the eye to be tracked on the basis of said received electric detection signals.

Fig. 1

**Fig. 2**

# Fig. 3

**Europäisches Patentamt**
**European Patent Office**
**Office européen des brevets**

# EUROPEAN SEARCH REPORT

Application Number

**EP 24 42 5025**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 980 415 B1 (OUDERKIRK ANDREW JOHN [US] ET AL) 20 April 2021 (2021-04-20) | 1-6,8-11 | INV. G02B27/01 |
| Y | * column 6, line 54 - column 7, line 7; figures 2,3,4 * <br> * column 5, line 14 - column 6, line 3 * <br> * column 7, line 60 - column 8, line 53 * <br> * column 6, lines 20-29 * <br> * column 9, lines 12-30 * <br> * column 10, line 61 - column 11, line 7 * <br> * column 16, lines 21-46 * <br> * column 15, line 63 - column 16, line 3; figures 8a,8b * <br> ----- | 7 | G02B27/00 |
| X | US 2020/278539 A1 (PETLJANSKI BRANKO [US] ET AL) 3 September 2020 (2020-09-03) <br> * paragraphs [0053] - [0056], [0064]; figures 4-6 * <br> ----- | 1,4,11 | |
| X | US 2015/098620 A1 (WU BO [US] ET AL) 9 April 2015 (2015-04-09) | 1,2,7,11 | |
| Y | * paragraphs [0053], [0082] - [0086]; figures 1a,1b,5a,5b,6 * <br> ----- | 7 | TECHNICAL FIELDS SEARCHED (IPC) <br><br> G02B |

The present search report has been drawn up for all claims

| Place of search | Date of completion of the search | Examiner |
|---|---|---|
| Munich | 15 November 2024 | Blau, Gerd |

EPO FORM 1503 03.82 (P04C01)

## ANNEX TO THE EUROPEAN SEARCH REPORT
## ON EUROPEAN PATENT APPLICATION NO.

EP 24 42 5025

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| US 10980415 | B1 | 20-04-2021 | US | 10980415 B1 | 20-04-2021 |
| | | | US | 11559201 B1 | 24-01-2023 |
| US 2020278539 | A1 | 03-09-2020 | CN | 111263925 A | 09-06-2020 |
| | | | EP | 3714350 A1 | 30-09-2020 |
| | | | EP | 4293484 A2 | 20-12-2023 |
| | | | JP | 7008131 B2 | 25-01-2022 |
| | | | JP | 2020536309 A | 10-12-2020 |
| | | | KR | 20200080226 A | 06-07-2020 |
| | | | US | 2020278539 A1 | 03-09-2020 |
| | | | US | 2022003994 A1 | 06-01-2022 |
| | | | US | 2023314798 A1 | 05-10-2023 |
| | | | WO | 2019067731 A1 | 04-04-2019 |
| US 2015098620 | A1 | 09-04-2015 | US | 8878749 B1 | 04-11-2014 |
| | | | US | 8913789 B1 | 16-12-2014 |
| | | | US | 8942419 B1 | 27-01-2015 |
| | | | US | 2015098620 A1 | 09-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5345281 A
- US 20180113508 A1
- US 20190384388 A1